# EUROPEAN PATENT SPECIFICATION

(11) **EP 4 155 152 B1**
(45) Date of publication and mention of the grant of the patent: **06.03.2024**
(21) Application number: 22188866.2
(22) Date of filing: 04.08.2022
(51) Int. Cl.: B60W 30/12, B60W 30/14, B60W 30/16, B60W 50/035, B60W 50/029, B60W 60/00, B60K 28/14, B60W 30/09, B60W 30/095

(54) **DRIVING CONTROL APPARATUS FOR VEHICLE**
ANTRIEBSSTEUERUNGSVORRICHTUNG FÜR FAHRZEUG
APPAREIL DE COMMANDE D'ENTRAÎNEMENT POUR VÉHICULE

(30) Priority: 24.09.2021 JP 2021155892
(43) Date of publication of application: 29.03.2023
(73) Proprietor: Suzuki Motor Corporation, Hamamatsu-shi, Shizuoka 432-8611 (JP)
(72) Inventor: SATO, Katsuhiko, HAMAMATSU-SHI, 432-8611 (JP)
(74) Representative: Plasseraud IP

(56) References cited:
- WO-A1-2019/197864
- JP-A- 2020 158 090
- US-A1- 2019 256 064
- US-A1- 2019 308 617
- US-A1- 2020 307 582
- US-B2- 9 766 085

## Description

### [Technical Field]

The present invention relates to driving control apparatuses for vehicles, and more particularly, relates to a risk minimization function during operation of an automatic lane keeping system.

### [Background Art]

Various driving control systems are being put into practical use and are being internationally standardized for purposes of reducing the burdens on drivers and for supporting safe driving. For example, driving control systems, such as an inter-vehicle distance control system (ACCS) and a lane keeping assistance system (LKAS) that have already been put into practical use, and a "partially automated in-lane driving system (PADS)" that is a combination of these, are in the process of being put into practical use. Among these, regulations for "automatic lane keeping systems (ALKS)" related to automated driving in a single lane under specific conditions, such as a motor highway with a speed limit of 60 km/h or less and a physical separation zone (median strip) separating from an oncoming lane, are being developed.

In such an automatic lane keeping system, when a serious failure occurs in the system or when a driver cannot respond to an operation takeover request, operation shifts to risk minimization control (MRM: Minimal Risk Maneuver). On the other hand, when a collision with another vehicle is anticipated, emergency avoidance control (EM: Emergency Maneuver) is activated, and the operation shifts to collision avoidance or in-lane stop by deceleration at maximum deceleration.

For example, Patent Document 1 discloses increasing a lateral distance from another vehicle traveling in parallel when an automatic stop mode that stops a vehicle in a predetermined stop area is performed in a case in which a predetermined condition that makes it difficult for a vehicle control system or driver to continue driving is satisfied while the vehicle is traveling.

### [Citation List]

### [Patent Document]

[Patent Document 1] JP 2020-158090 A

### [Summary of Invention]

### [Problem to be Solved by the Invention]

However, when the vehicle is decelerated and stopped, there is a risk of contact and collision by a vehicle in the rear when the vehicle in the rear cannot avoid the decelerated and stopped vehicle due to delay or the like in detection or braking by the vehicle in the rear.

The present invention has been made in view of the above-described actual situation, and an object is to reduce a risk of contact and collision by a vehicle in the rear by taking the position of the vehicle in the rear into consideration when risk minimization control is activated.

### [Means for Solving the Problems]

In order to solve the above-described problems, the present invention is
a driving control apparatus for a vehicle, including:
an environmental condition estimating part including a surrounding recognition function for recognizing a vehicle's driving lane, neighboring lanes, other vehicles driving in the driving lanes, and surrounding environments and a function for obtaining the vehicle's moving state;
a path generating part for generating a target path on the basis of information obtained by the environmental condition estimating part; and
a vehicle control part configured to perform speed control and steering control for making the vehicle follow the target path, and having:
   a function for performing automated in-lane driving by maintaining a set vehicle speed when there is no preceding vehicle in the vehicle's driving lane, and maintaining a set inter-vehicle distance when there is a preceding vehicle; and
   an MRM function for performing risk minimization control including decelerating and stopping the vehicle in the lane when a system failure occurs during operation of the automated in-lane driving function or operation is not taken over by a driver when a system failure occurs,
   characterized in that when the MRM function is activated, a direction of corrective steering is determined on the basis of a lateral position of a vehicle in the rear in the vehicle's driving lane and the corrective steering is performed during deceleration.

### [Advantageous Effects of Invention]

In the driving control apparatus for a vehicle according to the present invention, as described above, when the MRM function is activated, the direction of corrective steering is determined on the basis of the lateral position of a vehicle in the rear in the vehicle's driving lane and the corrective steering is performed during deceleration, so it is advantageous in reducing risk of contact and collision by the vehicle in the rear.

### [Brief Description of Drawings]

[Figure 1] Figure 1 is a schematic view showing a driving control system of a vehicle.
[Figure 2] Figure 2 is a schematic plan view showing an external sensor group of the vehicle.
[Figure 3] Figure 3 is a block diagram showing the driving control system of the vehicle.
[Figure 4] Figure 4 is a state transition diagram of control in the driving control system.
[Figure 5] Figure 5 is a flowchart showing control of an embodiment of the preset invention.
[Figure 6] Figure 6 is a schematic plan view showing an example of relative positional relationship between a vehicle and a vehicle in the rear when MRM is activated.
[Figure 7] Figure 7 is a schematic plan view showing another example of relative positional relationship between the vehicle and a vehicle in the rear when the MRM is activated.
[Figure 8] Figure 8 is a flowchart showing a corrective steering direction determination when the MRM is activated.

### [Mode for Carrying Out the Invention]

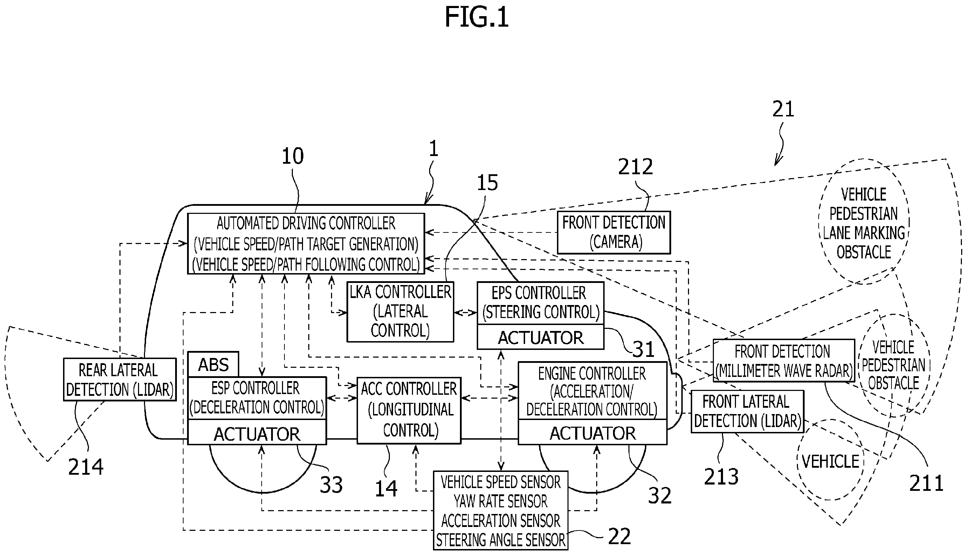

Hereinafter, an embodiment of the present invention will be described in detail with reference to the drawings. In Figure 1, a vehicle 1 equipped with a driving control system according to the present invention includes, in addition to common components, such as an engine and a vehicle body, of an automobile, an external sensor 21 for detecting a vehicle surrounding environment, an internal sensor 22 for detecting vehicle information, a controller/actuator group for speed control and steering control, an ACC controller 14 for inter-vehicle distance control, an LKA controller 15 for lane keeping control, and an automated driving controller 10 for controlling them to execute partially automated in-lane driving (PADS: Partially Automated in-lane Driving System) and automated in-single lane driving (ALKS: Automatic Lane Keeping System) in order to perform, at the vehicle side, recognition, determination, and operation conventionally performed by a driver.

The controller/actuator group for speed control and steering control includes an EPS (Electric Power Steering) controller 31 for steering control, an engine controller 32 for acceleration/deceleration control, and an ESP/ABS controller 33. An ESP (Electronic Stability Program, registered trademark) includes an ABS (Antilock Brake System) to form a stability control system (vehicle behavior stabilization control system).

The external sensor 21 is composed of a plurality of detection means for inputting lane markings on a road defining the vehicle's own driving lane and neighboring lanes, and presence of and relative distance from other vehicles, obstacles, people, and the like around the vehicle into the automated driving controller 10 as external data such as image data or point cloud data.

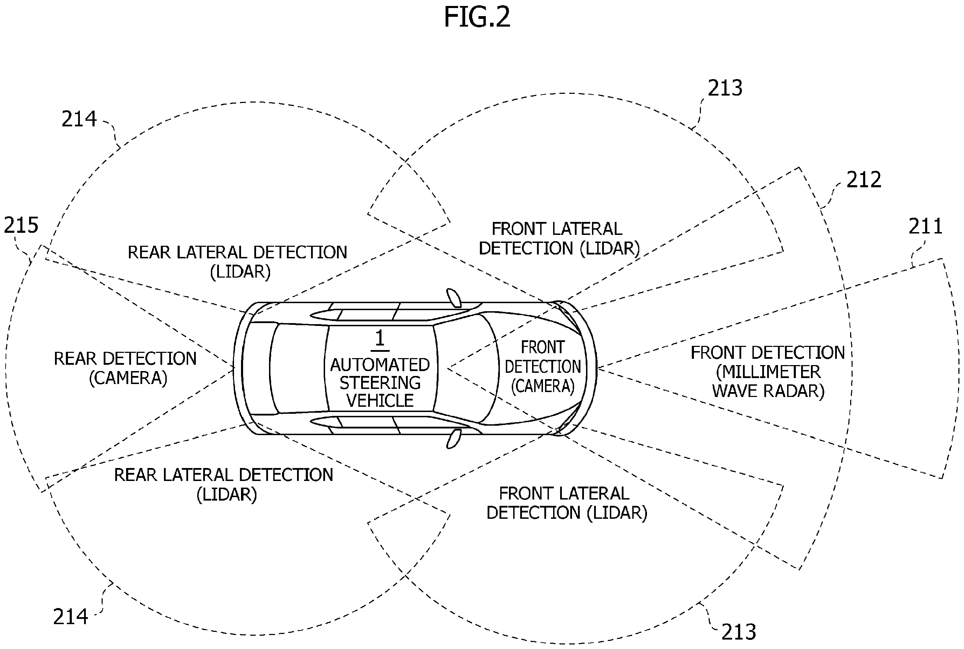

For example, as shown in Figure 2, the vehicle 1 includes a millimeter wave radar (211) and a camera (212) as front detection means 211 and 212, LIDARs (Laser Imaging Detection And Ranging) as front lateral detection means 213 and rear lateral detection means 214, and a camera (back camera) as rear detection means 215, covers 360 degrees around the vehicle, and can detect positions of and distances from vehicles, obstacles and the like, and lane marking positions of the vehicle's own driving lane and the neighboring lanes within a predetermined range in the front, rear, left, and right directions of the vehicle. Note that a millimeter wave radar (or LIDAR) can be also added as the rear detection means.

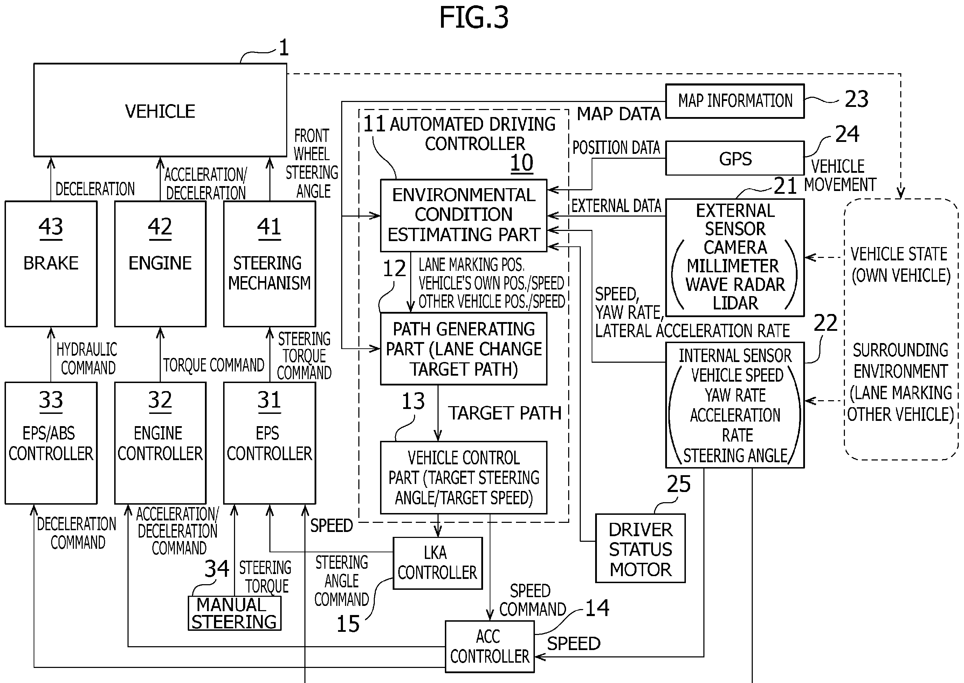

The internal sensor 22 is composed of a plurality of detection means, such as a vehicle speed sensor, a yaw rate sensor and an acceleration sensor, for measuring physical quantities representing the vehicle's moving state, and their measurement values are input into the automated driving controller 10, ACC controller 14, LKA controller 15, and EPS controller 31 as shown in Figure 3, and arithmetically processed together with the input from the external sensor 21.

The automated driving controller 10 includes an environmental condition estimating part 11, a path generating part 12 and a vehicle control part 13, and includes a computer for performing functions as described below, that is, a ROM storing programs and data, a CPU for performing arithmetic processing, a RAM for reading out the programs and data, and storing dynamic data and arithmetic processing results, an input/output interface, and the like.

The environmental condition estimating part 11 acquires the absolute position of the vehicle itself by matching the vehicle's own position information by positioning means 24 such as a GPS and map information 23, and on the basis of the external data such as the image data and point cloud data obtained by the external sensor 21, estimates positions of lane markings of the vehicle's own driving lane and the neighboring lanes, and positions and speeds of other vehicles. In addition, it acquires the vehicle's moving state itself from internal data measured by the internal sensor 22. Furthermore, it acquires the driver's state by a driver status monitor 25.

The path generating part 12 generates a target path from the vehicle's own position estimated by the environmental condition estimating part 11 to an arrival target. In addition, the path generating part 12 generates a target path from the vehicle's own position to an arrival target point in automated driving, such as lane keeping driving, lane change, and course change, on the basis of the positions of the lane markings of the neighboring lane, the positions and speeds of the other vehicles, and the vehicle's moving state estimated by the environmental condition estimating part 11.

The vehicle control part 13 calculates a target vehicle speed and a target steering angle on the basis of the target path generated by the path generating part 12, transmits a speed command for constant speed cruise or inter-vehicle distance keeping and following cruise to the ACC controller 14, and transmits a steering angle command for path following to the EPS controller 31 via the LKA controller 15.

The vehicle speed is also input into the EPS controller 31 and ACC controller 14. Because a steering reaction force changes according to the vehicle speed, the EPS controller 31 refers to a steering angle-steering torque map for each vehicle speed and transmits a torque command to a steering mechanism 41. The engine controller 32, ESP/ABS controller 33, and EPS controller 31 control an engine 42, a brake 43, and the steering mechanism 41, and thereby the movement of the vehicle 1 in a longitudinal direction and a lateral direction is controlled.

### Outline of Partially Automated In-Lane Driving System

Next, an outline of the partially automated in-lane driving system (PADS) will be described.

The partially automated in-lane driving system (PADS) is a system that combines the inter-vehicle distance control system (ACCS: Adaptive Cruise Control System) and the lane keeping assistance system (LKAS), and is enabled in a state in which both ACC controller 14 included in the inter-vehicle distance control system (ACCS) and LKA controller 15 included in the lane keeping assistance system (LKAS) are operating together with the automated driving controller 10.

At the same time as operation of the partially automated in-lane driving system, the automated driving controller 10 (path generating part 12) generates a target path in a single lane and a target vehicle speed on the basis of the external information (lanes, vehicle's own position, and positions and speeds of other vehicles driving in the vehicle's own driving lane and the neighboring lane) obtained by the environmental condition estimating part 11 through the external sensor 21, and the internal information (vehicle speed, yaw rate, and acceleration) obtained by the internal sensor 22.

The automated driving controller 10 (vehicle control part 13) estimates the speed, attitude, and lateral displacement of the vehicle after Δt seconds from a relationship between a yaw rate y and lateral acceleration rate (d²y/dt²) occurring due to vehicle movement, by the vehicle's own position and motion characteristics of the vehicle itself, that is, by a front wheel steering angle δ occurring when a steering torque T is applied to the steering mechanism 41 during traveling at a vehicle speed V, gives a steering angle command that makes the lateral displacement to yt after Δt seconds to the EPS controller 31 via the LKA controller 15, and gives a speed command that makes the speed to Vt after Δt seconds to the ACC controller 14.

Although the ACC controller 14, LKA controller 15, EPS controller 31, engine controller 32, and ESP/ABS controller 33 operate independently of automatic steering, they are also operable according to command input from the automated driving controller 10 while a partially automated in-lane driving function (PADS), automatic lane keeping system (ALKS) and a partially automated lane change system (PALS) are operating.

The ESP/ABS controller 33 that has received a deceleration command from the ACC controller 14 issues a hydraulic command to an actuator and controls braking force of the brake 43 to control the vehicle speed. In addition, the engine controller 32 that has received an acceleration/deceleration command from the ACC controller 14 controls an actuator output (degree of throttle opening) to give the engine 42 a torque command and controls driving force to control the vehicle speed.

The ACC function (ACCS) functions with combination of hardware and software, such as the millimeter wave radar as the front detection means 211 included in the external sensor 21, ACC controller 14, engine controller 32, and ESP/ABS controller 33.

That is, in a case in which there is no vehicle ahead, the ACC function performs constant speed cruise by setting an ACC set speed (set speed) as the target vehicle speed; and in a case of having caught up with the vehicle ahead (in a case in which a speed of the vehicle ahead is equal to or slower than the ACC set speed), the ACC function performs following cruise to the vehicle ahead while maintaining an inter-vehicle distance (set inter-vehicle distance) corresponding to a time gap (inter-vehicle time = inter-vehicle distance/speed of vehicle) set in accordance with the speed of the vehicle ahead.

The LKA function (LKAS) detects the lane markings and the vehicle's own position by the environmental condition estimating part 11 of the automated driving controller 10 on the basis of image data obtained by the external sensor 21 (cameras 212 and 215), and performs steering control by the EPS controller 31 via the LKA controller 15 so as to be able to drive in the center of a lane.

That is, the EPS controller 31 that has received the steering angle command from the LKA controller 15 refers to a vehicle speed-steering angle-steering torque map, issues a torque command to an actuator (EPS motor), and gives a front wheel steering angle targeted by the steering mechanism 41.

The partially automated in-lane driving system (PADS) is implemented by combining longitudinal control (speed control and inter-vehicle distance control) by the ACC controller 14 and lateral control (steering control and lane keeping driving control) by the LKA controller 15 as described above.

### System State Monitoring

During operation of the partially automated in-lane driving system (PADS), the environmental condition estimating part 11 constantly monitors whether the driving state and surrounding environmental condition of the vehicle and the driver's state are maintained within an operational design domain (ODD) on the basis of the external information obtained through the external sensor 21, the vehicle information obtained by the internal sensor 22, the driver's state obtained by the driver status monitor 25, and the like.

When the environmental condition estimating part 11 determines that automated driving cannot be continued stably, such as when a system operating condition is determined to be deviated, or when a system abnormality or failure is detected, the driver is notified of an operation takeover request (TD: transition demand).

When the driver takes over driving operation within a predetermined time (for example, ten seconds) from the operation takeover request (TD), the operation shifts from the partially automated in-lane driving to manual driving. The driver's operation takeover is detected by a steering torque sensor or a steering wheel grip sensor. On the other hand, when the driving operation is not taken over within the predetermined time, minimal risk maneuver (MRM) is activated and risk minimization control is performed.

### Risk Minimization Control When Operation Takeover is Not Performed

The minimal risk maneuver (MRM) refers to a function for automatically shifting to a minimal risk condition when the driver cannot take over operation, although a change in the external driving environment or a failure or the like in the system has occurred and the driver is notified of the operation takeover request (TD), and specifically, includes control (safe stop) of decelerating and stopping in the lane by the automated driving controller 10.

As described above, the external sensor 21 is composed of the plurality of sensors, and the automated driving controller 10 is redundantly designed so that the minimal risk maneuver (MRM) can be executed by other sensors or detection means when an abnormality occurs in any sensor or detection means.

### Emergency Avoidance Control When Collision is Predicted

When a collision with another vehicle is predicted for some reason while the partially automated in-lane driving system (PADS) is operating, emergency maneuver (EM) is activated and emergency avoidance control is performed. The emergency avoidance control (EM) includes activation of the automatic emergency braking (AEB) for damage mitigation.

That is, the environmental condition estimating part 11 constantly calculates a predicted collision time (TTC) on the basis of information (inter-vehicle distance and relative speed) of a vehicle ahead (or obstacle) detected by the external sensor 21 and the vehicle speed of the own vehicle acquired by the internal sensor 22, and when it is determined that there is a high probability of collision, such as when the predicted collision time is equal to or less than a predetermined value, issues a brake request (hydraulic command) to an actuator of the brake 43 and executes automatic braking (automatic emergency braking).

### Outline of Partially Automated Lane Change System

Next, an outline of the partially automated lane change system (PALS) will be described on the assumption of lane change from a state of partially automated in-lane driving (PADS driving) on a highway with two or more lanes on one side with a median strip.

The partially automated lane change system (PALS) automatically performs lane change by determination of the system itself or the driver's instructions or approval, and is implemented by combining longitudinal control (speed control and inter-vehicle distance control) and lateral control (target path following control by automatic steering) by the automated driving controller 10.

At the same time as operation of the partially automated lane change system, the automated driving controller 10 (path generating part 12) constantly generates a target path for changing lanes from a currently driving lane to a neighboring lane on the basis of the external information (lane markings of the vehicle's driving lane and the neighboring lane, and positions and speeds of other vehicles driving in the vehicle's driving lane and the neighboring lane) obtained by the environmental condition estimating part 11 through the external sensor 21, and the internal information (vehicle speed, yaw rate, and acceleration rate) obtained by the internal sensor 22.

The automated lane change target path is a path that leads to a state of driving at the center of the neighboring lane by performing lane change from the currently driving lane; regarding other vehicles driving in the neighboring lane, their future positions and speeds are predicted, and automated lane change by automatic steering is executed by determination of the system under circumstances in which it is determined that there is no other vehicle in a front predetermined area, a rear predetermined area, and a lateral predetermined area of the neighboring lane set according to the speed of the vehicle.

Also during automated lane change, the monitoring around the vehicle is continued by the external information obtained by the environmental condition estimating part 11 through the external sensor 21, and when intrusion (interruption) of another vehicle into the front predetermined area, rear predetermined area, or lateral predetermined area is confirmed, the automated driving controller 10 determines whether to continue or cancel the lane change based on the position of the vehicle during the lane change.

When it is determined that the lane change cannot be continued and the lane change is cancelled, the automated driving controller 10 (path generating part 12) changes the target to be followed to the center line of the lane (original lane) in which the vehicle was driving before the start of the lane change, and regenerates a target path and a vehicle speed; the vehicle control part 13 gives a steering command to the EPS controller 31, and a speed command to the ACC controller 14 in order to cause the vehicle to follow the regenerated target path; and the vehicle returns to the original lane by automatic steering (automated lane return function).

Even when intrusion (interruption) of another vehicle into the front predetermined area, rear predetermined area, or lateral predetermined area is confirmed, when the vehicle has almost moved to the neighboring lane, for example, when three or more of four wheels cross the lane marking and enter the neighboring lane, the lane change is not cancelled and the lane change is continued.

When it is determined that the lane change is difficult to continue, the driver is notified of the operation takeover request (TD), the automated lane change is cancelled and authority is transferred to the driver. When the driver takes over, the operation shifts to manual driving, whereas when the driver cannot take over, the minimal risk maneuver (MRM) is activated.

### Outline of Partially Automated In-Lane Driving System

Next, an outline of the automatic lane keeping system (ALKS) will be described assuming a state of partially automated in-lane driving (PADS driving) on a highway with a median strip.

The automatic lane keeping system (ALKS) is a system combining the inter-vehicle distance control system (ACCS) and the lane keeping assistance system (LKAS) in the same way as the partially automated in-lane driving system (PADS), and is executed in a state in which both ACC controller 14 included in the inter-vehicle distance control system (ACCS) and the LKA controller 15 included in the lane keeping assistance system (LKAS) are operating together with the automated driving controller 10, but can only be executed in a speed range of 60 km/h or less.

The automated lane change function is stopped during operation of the automatic lane keeping system (ALKS), and automated driving is executed while maintaining a single lane. In addition to the above, the automatic lane keeping system (ALKS) can be executed when the driver status monitor 25 confirms that the driver has responded to the takeover request and can take over driving; as long as the driver is seated in the driver's seat and the seatbelt is fastened, the driver is not required to monitor the driving situation.

Since the minimum speed is set at 50 km/h on a highway, shift from the partially automated in-lane driving (PADS driving) to the automatic lane keeping system (ALKS) is performed when the vehicle speed falls to 50 km/h or less due to congestion on the highway substantially in a state of following cruise to the vehicle ahead by partially automated in-lane driving (PADS driving) or when, e.g., the vehicle catches up to the vehicle ahead that is driving at 50 km/h or less due to congestion.

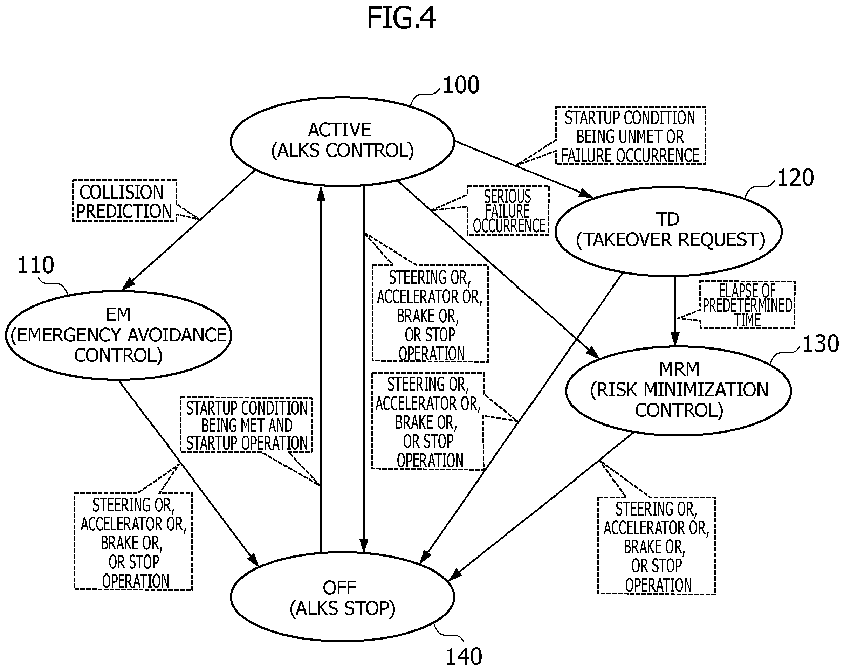

Figure 4 shows state transition of control in the automatic lane keeping system (ALKS). Even during the operation of the automatic lane keeping system (ALKS) (100), the environmental condition estimating part 11 constantly monitors the driving state and surrounding environmental condition of the vehicle, and the driver's state; when the environmental condition estimating part 11 determines that a system activation condition is not met, or detects a system failure (excluding serious failures described later), the system notifies the driver of the operation takeover request (TD) (120), and shifts from the automated lane keeping driving to the manual driving (140) when the driver takes over the driving operation within the predetermined time (for example, 10 seconds).

When the driving operation takeover is not performed within the predetermined time, the minimal risk maneuver (MRM) is activated, and the risk minimization control (130) is performed. Note that when the environmental condition estimating part 11 determines that a serious failure has occurred in the system (such as engine hydraulic pressure reduction, engine water temperature increase, or brake system abnormality that may cause an accident, fire, or the like) during the operation of the automatic lane keeping system (ALKS), the operation takeover request (TD) is not made, the minimal risk maneuver (MRM) is immediately activated, and the risk minimization control (130) is performed.

During the operation of the automatic lane keeping system (ALKS) (100), when a collision is predicted for some reason, such as interruption of another vehicle, sudden deceleration or collision of a preceding vehicle, or an obstacle (falling object), and an activation condition of emergency avoidance control is met, the emergency maneuver (EM) is activated, and automatic emergency braking (AEB) is performed as the emergency avoidance control (100).

The automated driving system as described above enables override by the driver's operation intervention not only during the operation of the automatic lane keeping system (ALKS) but also during the operation of the risk minimization control (MRM) or emergency avoidance control (EM). That is, when the override (accelerator OR yet brake OR) by the driver's acceleration/deceleration operation intervention or the override (steering OR) by the driver's steering intervention is performed, each automated driving function described above is stopped and the operation shifts to the driver's manual driving.

When the risk minimization control (MRM) described above is activated, control is performed to activate hazard lamps and decelerate and stop at predetermined deceleration (for example, 4.0 m/s² or less) while maintaining the driving lane; however, contact or collision by a vehicle in the rear may occur due to delay or the like in detection or braking by the vehicle in the rear.

### Improved Risk Minimization Control

The automated driving controller 10 according to the present invention is configured to perform corrective steering in consideration of the position of the vehicle in the rear when the risk minimization control (MRM) is activated, and in order to perform such corrective steering, constantly monitors the driving position of the vehicle in the rear as follows.

That is, when there is a vehicle in the rear within a rear predetermined distance in the vehicle's driving lane, the environmental condition estimating part 11 constantly detects a lateral position in the lane, together with the lane markings and the vehicle's own position, on the basis of the image data obtained by the external sensor 21 (cameras 212 and 215).

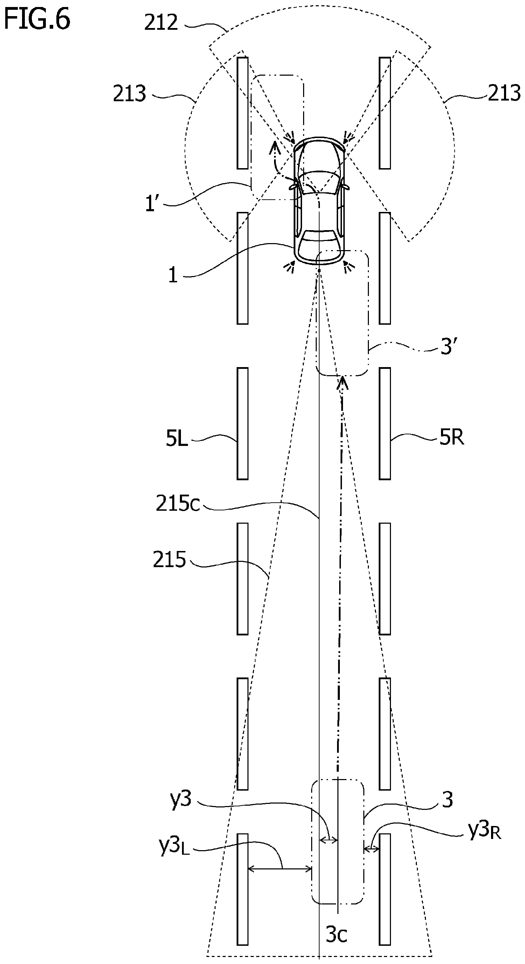

For example, as shown in Figure 6, when there is a vehicle 3 in the rear within the rear predetermined distance in the vehicle's driving lane, a lateral position y3 of the vehicle 3 in the rear is detected as a lateral deviation amount (relative deviation amount) and a deviation direction of either left or right of a center 3c of the vehicle 3 in the rear with respect to a center line 215c of a rear detection area of the vehicle 1. The lateral position y3 of the vehicle 3 in the rear can also be detected on the basis of lateral distances y3R and y3L from lane markings 5R and 5L to the vehicle 3 in the rear. Furthermore, at night, the center 3c can be detected from left and right head lamps of the vehicle 3 in the rear.

The rear predetermined distance in the vehicle's driving lane is set, assuming that the vehicle 3 in the rear follows and travels at the same speed as the vehicle 1, on the basis of a braking distance and a free running distance (vehicle in the rear reaction distance + braking increase distance) at maximum deceleration at the speed; however, when ranging means (such as a millimeter wave radar) is added as the rear detection means, the rear predetermined distance may be set on the basis of an estimated vehicle speed of the vehicle 3 in the rear.

The environmental condition estimating part 11 constantly monitors, on the basis of detection information of the external sensor 21 (212 and 213), presence of a neighboring lane and an effective road shoulder that can serve as evacuation spaces for the vehicle 1 and vehicle 3 in the rear. The effective road shoulder is, for example, a road shoulder generally provided on a highway and having a pavement structure with a width of 1.75 m or more, and does not include a protective road shoulder without the pavement structure.

When the risk minimization control (MRM) is activated, corrective steering is performed in parallel with deceleration, as follows.

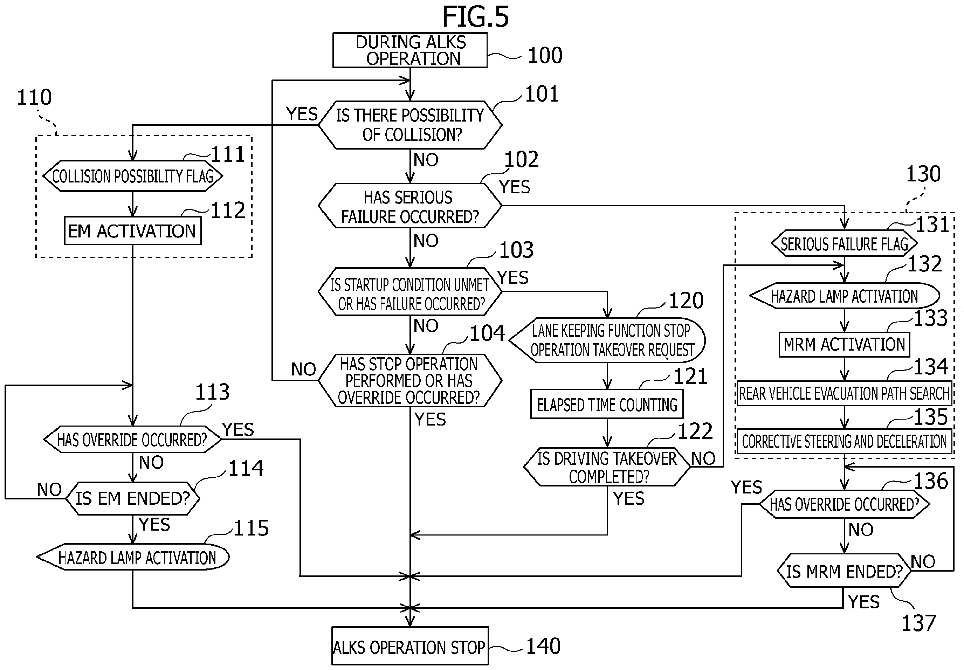

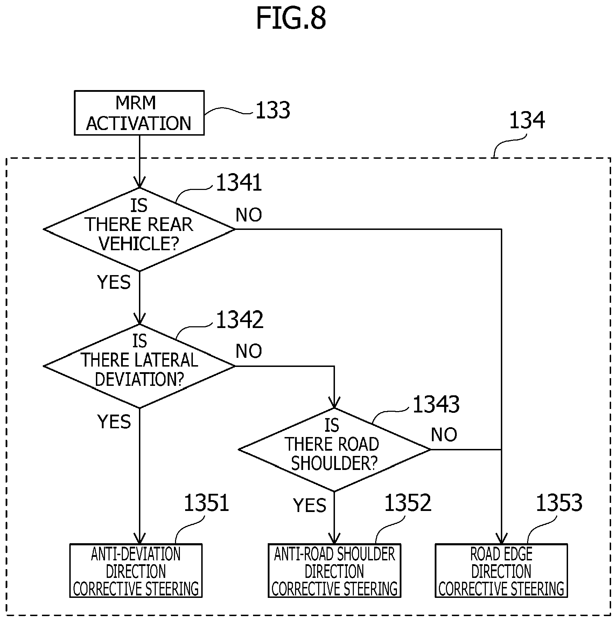

Figure 8 is a flowchart showing a corrective steering direction determination when the risk minimization control (MRM) is activated, and corresponds to vehicle in the rear evacuation path search (step 134) in Figure 5; when the risk minimization control (MRM) is activated (step 133), whether there is a vehicle in the rear is first confirmed (step 1341), and when there is a vehicle in the rear (step 1341; YES), the lateral position of the vehicle in the rear is referred to (step 1342).

When the vehicle in the rear is deviating to either left or right (step 1342; YES), a direction of the corrective steering is set to a direction (anti-deviation direction) opposite to the lateral deviation of the vehicle in the rear so that avoidance width for the vehicle in the rear to avoid the vehicle 1, with as little steering amount as possible, is secured as wide as possible (step 1351).

For example, as shown in Figure 6, when the vehicle in the rear 3 is deviating to the right side with respect to the vehicle 1, the corrective steering to the left side, which is a direction opposite to the deviation, is performed so that the vehicle 3 in the rear can avoid the vehicle 1 with a little steering and the avoidance width for the vehicle 3 in the rear is wider.

A steering amount of the corrective steering can be, for example, a steering amount that gives lateral deviation corresponding to difference between width of the vehicle 1 and the deviation y3 of the vehicle 3 in the rear at a travel distance until deceleration and stop estimated on the basis of a vehicle speed when the risk minimization control (MRM) is activated; a corrective steering angle command is given to the EPS controller 31 via the LKA controller 15.

On the other hand, when the relative lateral deviation of the vehicle in the rear is equal to or less than a predetermined value (Figure 8, step 1342; No), since avoidance behavior of the vehicle in the rear cannot be immediately determined, whether or not there is a neighboring lane or a road shoulder on a road edge side is referred to on the basis of the detection information of the external sensor 21 (212 and 213) (step 1343).

When there is a neighboring lane or an effective road shoulder on either the left or right side of the vehicle's driving lane (step 1343; YES), the direction of the corrective steering is set to a side (median strip side) opposite to the neighboring lane or road shoulder in order to increase the avoidance width for the vehicle in the rear to that side (step 1352).

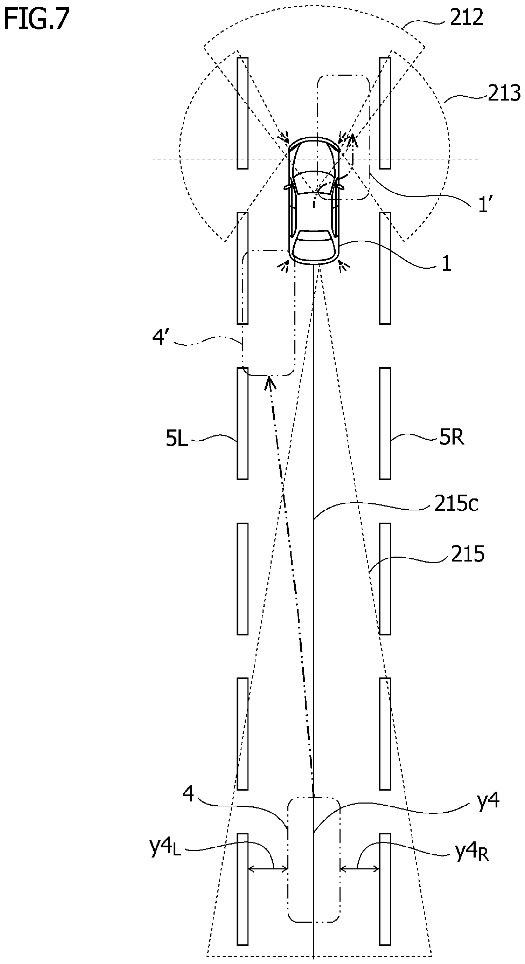

For example, as shown in Figure 7, when relative lateral deviation of a vehicle 4 in the rear is equal to or less than the predetermined value but there is an effective road shoulder (or neighboring lane) on the left side of the vehicle's driving lane, the corrective steering to the right side, which is a direction opposite to the road shoulder (or neighboring lane), is performed so that the avoidance width for the vehicle 4 in the rear is secured to be wide including the effective road shoulder (or neighboring lane).

Through the above-mentioned process, the direction and steering amount of the corrective steering when the risk minimization control (MRM) is activated are determined, and the corrective steering is performed in parallel with deceleration (brake control) at the predetermined deceleration. This corrective steering is basically performed within the lane, and the steering amount is minimal, so an impact on an attitude of the vehicle 1 is small and behavior stabilization control by the ESP/ABS controller 33 can cope with it.

### Control Flow during Operation of Automatic Lane Keeping System

Next, a control flow (Figure 5) during the operation of the automatic lane keeping system will be described.

### (1) Activation of Automatic Lane Keeping System (ALKS)

When the vehicle speed falls to 60 km/h or less in a state of following cruise to a vehicle ahead by the partially automated in-lane driving (PADS driving) and an activation condition is met, the operation shifts to the automatic lane keeping system (ALKS) (step 100).

### (2) Collision Risk Determination

During the operation of the automatic lane keeping system (ALKS), a collision risk determination is constantly made (step 101). That is, when a predicted collision time (TTC) becomes equal to or less than a predetermined value due to appearance or the like of a stopped vehicle or an obstacle due to sudden braking of a preceding vehicle, sudden interruption of another vehicle, or lane change of a preceding vehicle (steering avoidance), and it is determined that there is a collision risk, the operation shifts to the emergency avoidance control (EM) (step 110).

### (3) Emergency Avoidance Control

When the operation shifts to the emergency avoidance control (EM), at the same time as a collision determination flag (step 111), the automatic emergency braking (AEB) is activated as the emergency avoidance control (step 112), and the automatic emergency braking is performed at the maximum deceleration (5 m/s² or more).

### (5) Determination of Whether Override has Occurred During EM Operation

The determination of whether override has occurred continues during the operation of the emergency avoidance control (automatic emergency braking) also (step 113); when a steering intervention equal to or greater than a predetermined steering override threshold value, an accelerator operation intervention equal to or greater than a predetermined accelerator override threshold value, or a brake operation intervention equal to or greater than a predetermined brake override threshold value is detected, the automatic lane keeping system (ALKS) stops, and the operation shifts to manual driving (step 140).

### (6) Emergency Avoidance Control Completion Determination

A determination of whether the emergency avoidance control (EM) is completed is made on the basis of the vehicle state and the surrounding environment (step 114). That is, when there is no longer a risk of an imminent collision (due to emergency stop or a change in the surrounding environment), or the system is made inactive by the driver, the emergency avoidance control is determined to be completed, then hazard lamps blink (step 1115), and the automatic lane keeping system (ALKS) stops (step 140).

### (7) Serious Failure Determination

During the operation of the automatic lane keeping system (ALKS), a determination of whether a serious failure has occurred is constantly made (step 102) by a self-diagnosis function of the vehicle. Examples of serious failure include engine hydraulic pressure reduction, engine water temperature increase, and brake system abnormality that may cause an accident, fire, or the like. When it is determined that a serious failure has occurred, a serious failure flag is set (step 131), and the operation shifts to the risk minimization control (MRM) (130).

### (8) System Startup Condition being Unmet or Failure Determination

During the operation of the automatic lane keeping system (ALKS), the environmental condition estimating part 11 constantly determines whether the driving state and surrounding environmental condition of the vehicle are maintained within the operational design domain (ODD) of the system, the driver status monitor 25 constantly determines whether the driver is in a state of being able to take over driving, and the self-diagnosis function of the vehicle constantly determines whether there are failures or defects in components of the automatic lane keeping system (step 103). The ODD of the automatic lane keeping system includes environmental conditions such as strong wind in addition to road conditions and vehicle speed, and a system failure and an external sensor failure fall under these conditions.

When the system startup condition is unmet or a failure is determined to have occurred, stop advance notice of the automatic lane keeping system (ALKS) and the operation takeover request (TD) are made (step 120), and counting of the predetermined time (for example, 10 seconds) starts (step 121).

### (9) Driving Takeover Determination

In step 122, when the driving operation takeover is confirmed by detection of the steering torque or the like within the predetermined time (for example, 10 seconds), the automatic lane keeping system (ALKS) stops and the operation shifts to manual driving (step 140). On the other hand, when the driving operation takeover is not confirmed within the predetermined time, the operation shifts to the risk minimization control (MRM) (130).

### (10) Risk Minimization Control

When the operation shifts to the risk minimization control (MRM), at the same time as the hazard lamps are activated (step 132), the minimal risk maneuver (MRM) activates (step 133), and the automated driving controller 10 starts control to decelerate and stop at the predetermined deceleration (for example, 4.0 m/s² or less) while staying in the driving lane.

### (11) Vehicle in Rear Avoidance Path Search

At the same time, whether there is a vehicle in the rear within the rear predetermined distance is referred to, and when there is a vehicle in the rear, the direction of the corrective steering is determined on the basis of its lateral position (step 134; Figure 8, steps 1341-1353), the corrective steering is performed in parallel with deceleration at the predetermined deceleration (step 135).

### (12) Determination of Whether Override has Occurred during MRM Operation

The determination of whether override has occurred continues during the operation of the risk minimization control (MRM) also (step 136); when a steering intervention equal to or greater than a predetermined steering override threshold value, an accelerator operation intervention equal to or greater than a predetermined accelerator override threshold value, or a brake operation intervention equal to or greater than a predetermined brake override threshold value is detected, the automatic lane keeping system (ALKS) stops, and the operation shifts to manual driving (step 140).

### (13) Risk Minimization Control Completion Determination

A determination of whether the risk minimization control (MRM) is completed is made on the basis of the vehicle state (step 137). That is, when the system is made inactive or the system stops the vehicle, the risk minimization control is determined to be completed; the automatic lane keeping system (ALKS) stops (step 140), the hazard lamps keep blinking, and all vehicle systems other than that stop.

### Operation and Effects

As detailed above, in the driving control apparatus for a vehicle according to the present invention, when the risk minimization control (MRM) is activated, the direction of corrective steering is determined on the basis of the lateral position (y3) of the vehicle 3 in the rear within the rear predetermined distance in the vehicle's driving lane and the corrective steering is performed during deceleration; so, even when the detection or braking by the vehicle in the rear is delayed, an avoidance path for the vehicle in the rear is secured by corrective steering; there is an advantage of being able to reduce the risk of contact and collision by the vehicle in the rear.

For example, as shown in Figure 6, when the risk minimization control (MRM) is activated, since the vehicle 1 moves to the left side within the lane and stops, as indicated by reference sign 1', by corrective steering to the left side opposite to the relative lateral deviation y3 of the vehicle 3 in the rear, even when the detection or braking by the vehicle 3 in the rear is delayed, and the steering avoidance is insufficient, the avoidance path is secured, by corrective steering, on the right side of the vehicle 1' and substantially in front of a vehicle 3' in the rear that has moved forward; a possibility of avoiding contact or collision by the vehicle 3' in the rear is increased.

At this time, since the corrective steering is performed in the vehicle 1's driving lane, it is not necessary to consider movements of vehicles in neighboring lanes; there is also an advantage that control can be immediately performed regardless of movements of vehicles in the neighboring lanes.

When the risk minimization control (MRM) is activated, when the lateral deviation of the vehicle 4 in the rear is equal to or less than the predetermined value, whether or not there is a neighboring lane or a road edge side effective road shoulder is referred to; when there is a neighboring lane or an effective road shoulder that can serve as an avoidance space for the vehicle 4 in the rear, the corrective steering to a direction opposite to it is performed; the avoidance width for the vehicle in the rear 4 is increased and the risk that the vehicle 1 is subject to rear-end collision by the vehicle 4 in the rear can be reduced.

For example, as shown in Figure 7, when an effective road shoulder is detected on the right side of the vehicle 1's driving lane, corrective steering is performed to the right side opposite to it; by moving to the right side in the lane and stopping as indicated by the reference sign 1', a sufficient avoidance width including the road shoulder is secured on the left side of the vehicle 1'; the vehicle 3' in the rear can move to the avoidance space with relatively little steering, which increases the risk that contact or collision by the vehicle 3' in the rear can be avoided.

When the risk minimization control (MRM) is activated, when there is no neighboring lane or effective road shoulder, the corrective steering to the road edge side in the vehicle's driving lane is performed; the avoidance width for the vehicle in the rear is secured on a side opposite to a road-side edge, which can minimize a risk of rear-end collision after deceleration and stop, and an impact on traffic flow.

### Other Embodiments

Although in the above embodiment, the case in which the corrective steering is performed within the lane in which the vehicle 1 is driving when the risk minimization control (MRM) is activated is mainly described, corrective steering may be performed across the lane marking 5L or 5R between the vehicle 1's driving lane and a neighboring lane or road shoulder. Therefore, the corrective steering may be performed including at least a partial movement from the lane in which the vehicle 1 is driving to the neighboring lane or road shoulder. In particular, when the relative lateral deviation of the vehicle in the rear is equal to or less than the predetermined value, the corrective steering can be also performed including a lane change to the neighboring lane or road shoulder, as long as it is confirmed that there is no other vehicle or obstacle in front and rear predetermined ranges in the neighboring lane or road shoulder.

Although in the above embodiment, the state transition of control during the operation of the automatic lane keeping system (ALKS) is mainly described, the corrective steering control according to the present invention may be performed when the risk minimization control (MRM) is activated during operation of another automated driving function, such as the partially automated in-lane driving system (PADS) or partially automated lane change system (PALS).

Although some embodiments of the present invention have been described above, the present invention is not limited to the above embodiments, and various modifications and changes are possible within the scope of the present invention as defined by the appended claims.

### [Reference Signs List]

10 Automated driving controller
11 Environmental condition estimating part
12 Path generating part
13 Vehicle control part
14 ACC controller
15 LKA controller
21 External sensor
22 Internal sensor
25 Driver status monitor
31 EPS controller
32 Engine controller
33 ESP/ABS controller
34 Manual steering (steering wheel)

## Claims

1. A driving control apparatus for a vehicle, comprising:
an environmental condition estimating part (11) including a surrounding recognition function for recognizing a vehicle's driving lane, neighboring lanes, other vehicles driving in the driving lanes, and surrounding environments and a function for obtaining the vehicle's moving state;
a path generating part (12) for generating a target path on the basis of information obtained by the environmental condition estimating part (11); and
a vehicle control part (13) configured to perform speed control and steering control for making the vehicle follow the target path, and having:
a function for performing automated in-lane driving by maintaining a set vehicle speed when there is no preceding vehicle in the vehicle's driving lane, and maintaining a set inter-vehicle distance when there is a preceding vehicle; and
an MRM function for performing risk minimization control including decelerating and stopping the vehicle in the lane when a system failure occurs during operation of the automated in-lane driving function or operation is not taken over by a driver when a system failure occurs,
**characterized in that** when the MRM function is activated, a direction of corrective steering is determined on the basis of a lateral position of a vehicle in the rear in the vehicle's driving lane and the corrective steering is performed during deceleration.

2. The driving control apparatus for the vehicle according to claim 1, wherein when the MRM function is activated, when there is a vehicle in the rear in the vehicle's driving lane and the lateral position of the vehicle in the rear is deviating to either left or right with respect to the vehicle's driving position, the direction of the corrective steering is set to a direction opposite to the deviation.

3. The driving control apparatus for the vehicle according to claim 2, wherein when the MRM function is activated, when there is a vehicle in the rear in the vehicle's driving lane, the deviation of the lateral position of the vehicle in the rear is equal to or less than a predetermined value, and there is no neighboring lane or road shoulder on a road edge side, the direction of the corrective steering is set to a road-side edge side, and when there is a neighboring lane or road shoulder on the road edge side, the direction of the corrective steering is set to a median strip side.

4. The driving control apparatus for the vehicle according to claim 1, wherein when the MRM function is activated, when there is a vehicle in the rear in the vehicle's driving lane and the lateral position of the vehicle in the rear is deviating to either left or right within the lane, the direction of the corrective steering is set to a direction opposite to the deviation.

5. The driving control apparatus for the vehicle according to any one of claims 1 to 4, wherein the corrective steering when the MRM function is activated is performed within the driving lane.

6. The driving control apparatus for the vehicle according to any one of claims 1 to 4, wherein corrective steering when the MRM function is activated and is performed including at least a partial movement from the driving lane to a neighboring lane or road shoulder.

## Patentansprüche

1. Fahrsteuerungsvorrichtung für ein Fahrzeug, umfassend:
einen Umgebungsbedingung-Schätzteil (11), welcher eine Umgebungserkennungsfunktion zum Erkennen einer Fahrspur eines Fahrzeugs, benachbarter Fahrspuren, anderer Fahrzeuge, welche in den Fahrspuren fahren, und umliegender Umgebungen und eine Funktion zum Erhalten des Bewegungszustands des Fahrzeugs umfasst;
einen Pfad-Erzeugungsteil (12) zum Erzeugen eines Zielpfades auf der Grundlage von Informationen, welche durch den Umgebungsbedingung-Schätzteil (11) erhalten werden, und
einen Fahrzeug-Steuerungsteil (13), welcher dazu eingerichtet ist, eine Geschwindigkeitssteuerung und eine Lenksteuerung durchzuführen, um das Fahrzeug dazu zu bringen, dem Zielpfad zu folgen, und welcher aufweist:
eine Funktion zum Durchführen eines automatisierten Fahrens in einer Spur durch Beibehalten einer festgelegten Fahrzeuggeschwindigkeit, wenn sich kein vorausfahrendes Fahrzeug in der Fahrspur des Fahrzeugs befindet und Beibehalten eines festgelegten Zwischenfahrzeug-Abstands, wenn ein vorausfahrendes Fahrzeug vorhanden ist; und
eine MRM-Funktion zum Durchführen einer Risikominimierungssteuerung, umfassend ein Verzögern und ein Anhalten des Fahrzeugs in der Spur, wenn während eines Betriebs der Funktion des automatisierten Fahrens in einer Spur ein Systemfehler auftritt oder ein Betrieb nicht durch den Fahrer übernommen wird, wenn ein Systemfehler auftritt,
**dadurch gekennzeichnet, dass**, wenn die MRM-Funktion aktiviert ist, auf Grundlage einer lateralen Position eines Fahrzeugs auf der Rückseite in der Fahrspur des Fahrzeugs eine Richtung eines Korrekturlenkens bestimmt wird und das Korrekturlenken während einer Verzögerung durchgeführt wird.

2. Fahrsteuerungsvorrichtung für das Fahrzeug nach Anspruch 1, wobei, wenn die MRM-Funktion aktiviert ist, wenn sich ein Fahrzeug auf der Rückseite in der Fahrspur des Fahrzeugs befindet und die laterale Position des Fahrzeugs auf der Rückseite entweder nach links oder nach rechts in Bezug auf die Fahrposition des Fahrzeugs abweicht, die Richtung des Korrekturlenkens auf eine Richtung festgelegt ist, welche der Abweichung entgegengesetzt ist.

3. Fahrsteuerungsvorrichtung für das Fahrzeug nach Anspruch 2, wobei, wenn die MRM-Funktion aktiviert ist, wenn sich ein Fahrzeug auf der Rückseite in der Fahrspur des Fahrzeugs befindet, die Abweichung der lateralen Position des Fahrzeugs auf der Rückseite gleich wie oder kleiner als ein vorbestimmter Wert ist und keine benachbarte Spur oder ein Straßen-Bankette auf einer Straßenrandseite vorhanden ist, die Richtung des Korrekturlenkens auf eine straßenseitige Randseite festgelegt ist, und wenn eine benachbarte Spur oder ein Straßen-Bankette auf der Straßenrandseite vorhanden ist, die Richtung des Korrekturlenkens auf eine Mittelstreifen-Seite festgelegt ist.

4. Fahrsteuerungsvorrichtung für das Fahrzeug nach Anspruch 1, wobei, wenn die MRM-Funktion aktiviert ist, wenn sich ein Fahrzeug auf der Rückseite in der Fahrspur des Fahrzeugs befindet und die laterale Position des Fahrzeugs auf der Rückseite entweder nach links oder nach rechts innerhalb der Spur abweicht, die Richtung des Korrekturlenkens auf eine Richtung festgelegt ist, welche der Abweichung entgegengesetzt ist.

5. Fahrsteuerungsvorrichtung für das Fahrzeug nach einem der Ansprüche 1 bis 4, wobei, wenn die MRM-Funktion aktiviert ist, das Korrekturlenken innerhalb der Fahrspur durchgeführt wird.

6. Fahrsteuerungsvorrichtung für das Fahrzeug nach einem der Ansprüche 1 bis 4, wobei, wenn die MRM-Funktion aktiviert ist, das Korrekturlenken, einschließlich wenigstens einer Teilbewegung von der Fahrspur zu einer benachbarten Spur oder einem Straßen-Bankette, durchgeführt wird.

## Revendications

1. Appareil de commande de conduite pour véhicule, comprenant :
une partie d'estimation de conditions environnementales comprenant une fonction de reconnaissance d'environnement permettant de reconnaître une voie de circulation d'un véhicule, des voies voisines, d'autres véhicules circulant sur les voies de circulation et des environnements environnants, ainsi qu'une fonction permettant d'obtenir l'état de déplacement du véhicule ;
une partie de génération de trajectoire permettant de générer une trajectoire cible sur la base d'informations obtenues par la partie d'estimation de conditions environnementales ; et
une partie de commande de véhicule configurée pour effectuer une commande de vitesse et une commande de direction afin d'amener le véhicule à suivre la trajectoire cible, et comportant :
une fonction permettant d'exécuter une conduite automatisée sur voie en maintenant une vitesse définie de véhicule lorsqu'il n'y a pas de véhicule précédent sur la voie de circulation du véhicule, et en maintenant une distance définie entre véhicules lorsqu'il y a un véhicule précédent ; et
une fonction MRM permettant d'exécuter une commande de minimisation de risque consistant à décélérer et à arrêter le véhicule sur la voie lorsqu'une panne de système se produit pendant le fonctionnement de la fonction de conduite automatisée sur voie ou que le fonctionnement n'est pas pris en charge par un conducteur lorsqu'une panne de système se produit,
l'appareil étant **caractérisé en ce que**, lorsque la fonction MRM est activée, un sens de direction corrective est déterminé sur la base d'une position latérale d'un véhicule à l'arrière sur la voie de circulation du véhicule et la direction corrective est exécutée pendant la décélération.

2. Appareil de commande de conduite pour véhicule selon la revendication 1, dans lequel, lorsque la fonction MRM est activée, lorsqu'il y a un véhicule à l'arrière sur la voie de circulation du véhicule et que la position latérale du véhicule à l'arrière s'écarte vers la gauche ou la droite par rapport à la position de circulation du véhicule, le sens de la direction corrective est réglé sur un sens opposé à l'écart.

3. Appareil de commande de conduite pour véhicule selon la revendication 2, dans lequel, lorsque la fonction MRM est activée, lorsqu'il y a un véhicule à l'arrière sur la voie de circulation du véhicule, que l'écart de la position latérale du véhicule à l'arrière est inférieure ou égale à une valeur prédéterminée et qu'il n'y a pas de voie ou d'accotement voisin du côté route, le sens de la direction corrective est réglé du côté bas-côté, et lorsqu'il y a une voie ou un accotement voisin du côté route, le sens de la direction corrective est réglé du côté voie médiane.

4. Appareil de commande de conduite pour véhicule selon la revendication 1, dans lequel, lorsque la fonction MRM est activée, lorsqu'il y a un véhicule à l'arrière sur la voie de circulation du véhicule et que la position latérale du véhicule à l'arrière s'écarte vers la gauche ou la droite sur la voie, le sens de la direction corrective est réglé sur un sens opposé à l'écart.

5. Appareil de commande de conduite pour véhicule selon l'une quelconque des revendications 1 à 4, dans lequel la direction corrective, lorsque la fonction MRM est activée, est effectuée dans les limites de la voie de circulation.

6. Appareil de commande de conduite pour véhicule selon l'une quelconque des revendications 1 à 4, dans lequel la direction corrective, lorsque la fonction MRM est activée, est effectuée en incluant au moins un déplacement partiel de la voie de circulation à une voie ou accotement voisin.
